# EUROPÄISCHE PATENTSCHRIFT

(11) **EP 3 856 514 B1**
(45) Veröffentlichungstag und Bekanntmachung des Hinweises auf die Patenterteilung: **07.05.2025**
(21) Anmeldenummer: 19762411.7
(22) Anmeldetag: 06.09.2019
(51) Int. Cl.: B32B 17/10, B32B 3/30

(54) **VERBUNDGLASSCHEIBE UND VERFAHREN ZU DEREN HERSTELLUNG**
COMPOSITE GLASS PANEL AND METHOD FOR ITS MANUFACTURE
VITRE COMPOSITE ET SON PROCÉDÉ DE FABRICATION

(30) Priorität: 25.09.2018 EP 18196454
(43) Veröffentlichungstag der Anmeldung: 04.08.2021
(73) Patentinhaber: Saint-Gobain Glass France, 92400 Courbevoie (FR)
(72) Erfinder: VARGA, Gabor, 52134 Herzogenrath (DE); KLAUSS, Bastian, 52134 Herzogenrath (DE); ZEISS, Michael, 52134 Herzogenrath (DE); EFFERTZ, Christian, 52080 Aachen (DE)
(74) Vertreter: Gebauer, Dieter Edmund
(86) Internationale Anmeldenummer: PCT/EP2019/073797
(87) Internationale Veröffentlichungsnummer: WO 2020/064298

(56) Entgegenhaltungen:
- WO-A1-2017/178146
- US-A1- 2007 221 268
- US-A1- 2018 111 356

## Beschreibung

Die Erfindung betrifft eine Verbundglasscheibe, die zwei Glas- oder Polykarbonatscheiben und mindestens eine zwischen diese eingeklebte Polymerfolie oder ein Folien-Laminat und eine zwischen diesen angeordnete elektronische Funktionseinheit aufweist. Sie betrifft des Weiteren ein Verfahren zur Herstellung einer solchen Verbundglasscheibe.

In Kraftfahrzeugen und bei Gebäuden spielt die Erfassung von Zuständen oder Parametern der Umgebung für den sicheren und effizienten Betrieb eine immer größere Rolle. Moderne PKWs ebenso wie hochwertige Gebäude sind daher mit einer Vielzahl von Sensoren ausgestattet, die relevante Umgebungszustände oder -parameter erfassen und die aktuellen Werte an Verarbeitungs- und Steuereinheiten liefern, die Funktionen des Fahrzeugs oder Gebäudes steuern. Dies gilt im Übrigen nicht nur für Kraftfahrzeuge, sondern in gewissem Maße auch für bestimmte Wasserfahrzeuge.

Gewisse Sensoren lassen sich vorteilhaft auf oder in der Frontscheibe oder ggf. auch der Heckscheibe oder einer Glasdacheinheit eines PKW unterbringen. Entsprechende Anordnungen sind seit Langem für sog. Regensensoren bekannt, über die Scheibenwischerfunktionen des Fahrzeugs gesteuert werden. Im Rahmen des allgemeinen Trends zur weitestgehend kompletten Vorfertigung von Fahrzeugkomponenten gibt es Entwicklungen, die auf eine Integration entsprechender Sensoren in eine vorgefertigte Verglasungseinheit (etwa Front- oder Heckscheibe) eines Fahrzeugs abzielen. Entsprechende Lösungen sind in der EP 3 687 792 B2 erwähnt.

Fahrzeugscheiben mit integrierten oder teil-integrierten Sensoren sind im Übrigen aus der EP 2 121 308 B1 oder der CN 101 087 135 A bekannt. Aus der DE 10 2004 054 465 A1 ist ein optischer Feuchtigkeitssensor zur Detektion von Feuchtigkeit auf der Außenseite und/oder der Innenseite einer Kraftfahrzeugscheibe bekannt, der in die PVB-Folie integriert ist, mit der die beiden Scheiben der Verbundglasscheibe miteinander verbunden sind. Weiterhin ist aus der WO 2015/162107 A1 ein Glaspanel mit einer beleuchteten Schaltfläche und Heizfunktion bekannt.

Nach bisherigem Stand der Technik erfolgt die Integration elektronischer Funktionseinheiten und ihrer Zuleitungen in die Verbundglasscheibe jeweils im sogenannten Inline-Prozess, das heißt während des Verklebens der beiden Scheiben mit der dazwischenliegenden Polymerfolie (PVB-Folie). Hierdurch werden dem grundsätzlich mit hoher Geschwindigkeit durchführbaren Verbindungsprozess zeitliche Limitierungen auferlegt, die sich aus der Spezifik der jeweiligen Komponenten, Leitungen etc. ergeben und zu einer erheblichen Verringerung der Produktivität des Verbindungsprozesses (Inline-Prozesses) führen.

WO-A-2017178146 offenbart eine Verbundscheibe mit in Ausschnitten der polymeren Zwischenschicht angeordneten Sensoren. US-A-2018111356 offenbart eine Verbundscheibe mit einer Leiterplatte und Photodiode, wobei die Leiterplatte einstückig mit einem Anschlusskabel ausgebildet und mit einer Polymerummantelung versehen sein kann.

Der Erfindung liegt daher die Aufgabe zu Grunde, eine verbesserte Verbundglasscheibe sowie ein verbessertes Verfahren zu deren Herstellung anzugeben, die eine effiziente Herstellung mit hohem Durchsatz und entsprechend niedrigen Kosten erlauben.

Diese Aufgabe wird in ihrem Vorrichtungsaspekt durch eine Verbundglasscheibe mit den Merkmalen des Anspruchs 1 und in ihrem Verfahrensaspekt durch ein Verfahren mit den Merkmalen des Anspruchs 8 gelöst. Zweckmäßige Fortbildungen des Erfindungsgedankens sind Gegenstand der jeweiligen abhängigen Ansprüche.

Die Erfindung schließt den Gedanken ein, die in einer elektronik- bzw. sensorbestückten Verbundglasscheibe unterzubringenden elektronischen Funktionseinheiten und ggfs. sonstiger Teile zu einem vorgefertigten elektronischen Funktionsmodul zusammenzuführen und dieses dem erwähnten Inline-Prozess zusammen mit der Polymerfolie oder dem Folien-Laminat dem erwähnten Inline-Prozess zuzuführen und im Inline-Prozess mit dem für diesen Prozess üblichen Durchsatz gemeinsam zu verarbeiten. Sie schließt weiter den Gedanken sein, hierfür in einem Teil-Flächenbereich der Verbundglasscheibe einen Ausschnitt der Polymerfolie oder des Folien-Laminats vorzusehen, der den lateralen Abmessungen des Funktionsmoduls entspricht. Des Weiteren ist erforderlich, dass das Funktionsmodul mit einer Dicke erzeugt wird, die höchstens gleich der Dicke der Polymerfolie oder des Folien-Laminats ist, damit der Inline-Prozess mit den üblicherweise hierbei eingesetzten Polymerfolien bzw. Folien-Laminaten ablaufen kann.

Im Sinne der vorliegenden Erfindung ist der Begriff "elektronisches Funktionsmodul" in einem breiten Sinne zu verstehen, der ein Sensorik-Modul (beispielsweise Regen- bzw. Luftfeuchtigkeits- oder auch Lichtsensor-Modul), Anzeige-Modul (beispielsweise Head-Up-Displaymodul in der Frontscheibe), Kommunikationsmodul (beispielsweise Antennen- oder integriertes Funk-Modul) sowie Kombinationen der genannten Funktionseinheiten miteinander oder mit anderen, hier nicht erwähnten Funktionseinheiten einschließt.

Das elektronische Funktionsmodul umfasst mehrere elektronische Funktionseinheiten und/oder sonstige Teile, welche lateral nebeneinander und/oder mindestens teilweise vertikal überlappend innerhalb des Funktionsmoduls angeordnet sind.

Das elektronische Funktionsmodul umfasst weiterhin eine die elektrischen und elektronischen Teile isolierend umhüllende und elektrisch sowie mechanisch schützende Verkapselung aus einem geeigneten Kunststoffmaterial. Es kann sich hierbei insbesondere um eine für derartige Zwecke bekannte und bewährte Vergussmasse handeln.

Mit der Erfindung wird der wesentliche Vorteil erzielt, dass die bisher bei der Integration von Sensoren oder anderen elektronischen Funktionselementen bzw. -strukturen in eine Verbundglasscheibe zwangsweise einhergehenden Limitierungen der Produktivität und damit verbundenen Kostenerhöhungen überwunden werden können. Zudem ermöglicht die weitestgehende Zusammenfassung der entsprechenden Elemente und Strukturen in einem geschlossenen Funktionsmodul dessen unabhängige Vorab-Testung und somit die Aussortierung von mängelbehafteten Funktionseinheiten rechtzeitig vor deren Einbau in ein teures Endprodukt. Weiterhin lässt sich durch die Erfindung eine Änderung der Technologie des Inline-Prozesses aufgrund von technischen Änderungen bei den elektronischen Funktionseinheiten weitgehend vermeiden, weil solche innerhalb des elektronischen Funktionsmoduls realisiert werden und typischerweise keinen Einfluss auf die Außengestalt des Funktionsmoduls haben.

In aus derzeitiger Sicht wirtschaftlich besonders bedeutsamen Realisierungen ist die erfindungsgemäße Verbundglasscheibe ausgeführt als Frontscheibe oder Heckscheibe oder Dachverglasung eines Fahrzeugs, wobei der Ausschnitt der Polymerfolie oder des Folien-Laminats und das vorgefertigte elektronische Funktionsmodul an oder nahe einer Kante der Verbundglasscheibe angeordnet sind. Hervorzuheben ist hierbei der massenhafte Einsatz in Straßenfahrzeugen, insbesondere PKWs. Daneben ist aber der Einsatz auch bei anderen Fahrzeugen, etwa in Booten, Kleinflugzeugen, Lufttaxis o.ä. möglich. Neben dem Einsatz der Erfindung in Fahrzeugen kann auch ein Einsatz in der Gebäudeverglasung von Nutzen sein.

Gemäß den etablierten Technologien der Herstellung von Verbundglasscheiben speziell für Straßenfahrzeuge sind in bevorzugten Ausführungen der Erfindung die Dicke der Polymerfolie oder des Folien-Laminats und des elektronischen Funktionsmoduls kleiner als 1,2 mm und insbesondere im Bereich zwischen 0,6 mm und 1,0 mm. Es versteht sich, dass die Erfindung auch in Verbindung mit dickeren Polymerfolien oder Folien-Laminaten nutzbringend einsetzbar ist, wobei sich dann die Unterbringung mehrerer Funktionselemente in einem einzigen Funktionsmodul hinsichtlich der elektrischen Parameter und der Verbindungs- und Einkapselungstechnik einfacher gestalten kann.

In einer weiteren, aus derzeitiger Sicht bevorzugten Ausführung hat das elektronische Funktionsmodul die Form eines flachen Prismas, insbesondere eines flachen Quaders, oder einer flachen Kreisscheibe. Insbesondere können hierbei die beiden Hauptoberflächen des flachen Prismas oder der flachen Kreisscheibe mit Klebstoff zum Einkleben des elektronischen Funktionsmoduls zwischen die Glas- oder Polykarbonatscheiben beschichtet sein. Grundsätzlich kann von einer Klebstoffbeschichtung des Funktionsmoduls auch abgesehen werden, sofern die sichere Einbindung in die Verbundglasscheibe und die Einhaltung der an deren mechanische Eigenschaften gestellten Anforderungen auch ohne eine solche Verklebung gesichert ist.

In aus derzeitiger Sicht bedeutungsvollen Realisierungen umfasst das elektronische Funktionsmodul mindestens eine der folgenden Funktionseinheiten: einen Feuchtigkeitssensor, einen Lichtsensor, einen Temperatursensor, eine Antenne, einen Aktuator, eine elektronische Verarbeitungs- oder Schalteinheit, eine LCD-Anzeigeeinheit und eine LED-Anzeigeeinheit. Insbesondere kann mehr als eine Funktionseinheit aus dieser Gruppe enthalten sein, wobei dann die Vorteile der modularen Vorfertigung besonders augenfällig werden.

Erfindungsgemäß umfass das vollständig vorgefertigte elektronische Funktionsmodul eine integral vorgefertigte elektrische Zuleitung, welche in einem Zuleitungs-Ausschnitt der Polymerfolie oder des Folien-Laminats untergebracht ist. Grundsätzlich kann das Funktionsmodul auch mit mehreren integrierten Zuleitungen versehen sein, sofern dies im Interesse eines optimalen Funktionierens sinnvoll ist.

Verfahrensaspekte der Erfindung ergeben sich weitgehend aus den oben erläuterten Vorrichtungsaspekten und werden daher hier nicht nochmals erläutert. Es wird jedoch darauf hingewiesen, dass die Schritte des im Anspruch 9 spezifizierten Verfahrens sowie dessen Ausgestaltungen insoweit modifiziert sein können, als spezielle Ausgestaltungen des erfindungsgemäß vorgesehenen elektronischen Funktionsmoduls dies als sinnvoll erscheinen lassen. Wesentlich hierbei ist, dass die Vorteile, die mit der modularen Vorfertigung der elektronischen Funktionseinheiten für den hochproduktiven Prozess des Verbindens der Einzelscheiben mit einer Polymerfolie oder einem Folien-Laminat tatsächlich realisiert werden.

Vorteile und Zweckmäßigkeiten der Erfindung ergeben sich im Übrigen aus der nachfolgenden Beschreibung von Ausführungsbeispielen anhand der Figuren. Von diesen zeigen:
- Fig. 1a und 1b: schematische Darstellungen (Draufsicht und Schnittansicht) zu einem Ausführungsbeispiel der Erfindung und
- Fig. 2: eine schematische Darstellung zur Erläuterung des erfindungsgemäßen Verfahrens.

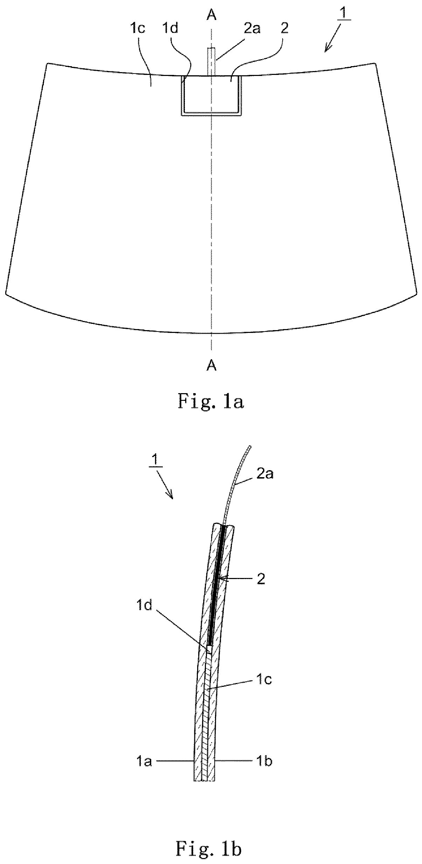

Fig. 1a zeigt schematisch eine Draufsicht einer PKW-Frontscheibe 1 gemäß einem Ausführungsbeispiel der Erfindung, und Fig. 1b zeigt eine Schnittansicht derselben längs einer Schnittebene A-A. Die Frontscheibe 1 ist als Verbundglasscheibe mit einer ersten und zweiten Glasscheibe 1a, 1b und einer zwischen die Glasscheiben eingeklebten Polymerfolie 1c gebildet. In einem Bereich nahe der Oberkante der Frontscheibe ist ein Ausschnitt 1d in der Polymerfolie 1c vorgesehen, in dem ein elektronisches Funktionsmodul 2 zwischen die erste und zweite Glasscheibe 1a, 1b eingefügt ist. Das Funktionsmodul 2 umfasst eine integral hiermit gefertigte Anschlussleitung (Flachbandkabel) 2a.

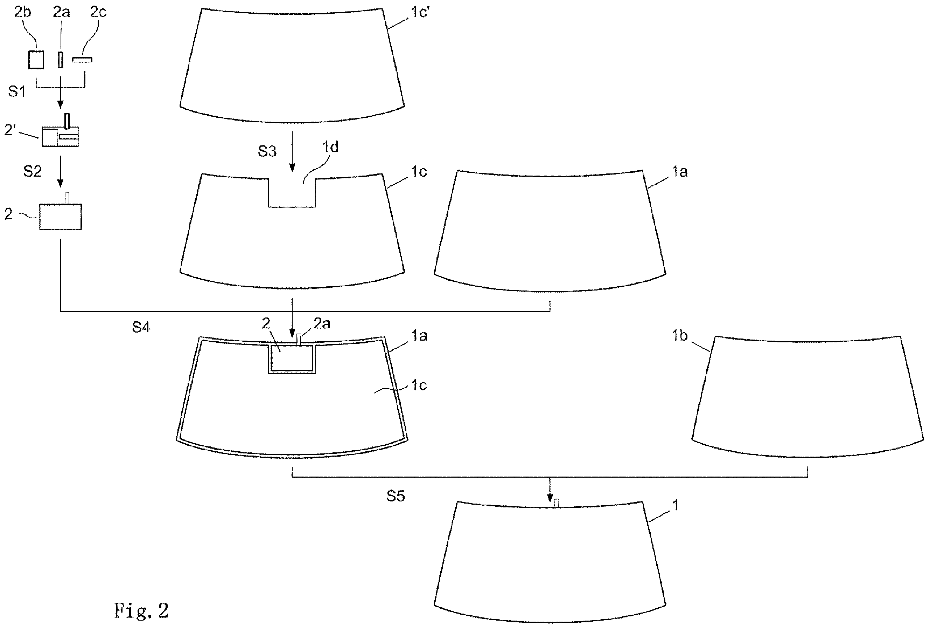

Fig. 2 zeigt schematisch wesentliche Schritte der Herstellung der in Fig. 1 gezeigten Verbundglasscheibe.

In einem Schritt S1 werden eine elektronische Funktionseinheit 2b und ein weiteres Teil 2c sowie eine vorgefertigte Zuleitung 2a' zu einer Funktionsmodul-Struktur 2' vormontiert. Die Funktionsmodul-Struktur 2' wird in einem Schritt S2 mit einer Vergussmasse isolierend und mechanisch schützend umhüllt und beidseitig mit einer Klebe-Beschichtung (nicht gezeigt) versehen, womit das fertige elektronische Funktionsmodul 2 erhalten wird. Eine PVB-Folie 1c' wird in einem Schritt S3 mit einem an die lateralen Abmessungen des elektronischen Funktionsmoduls 2 angepassten Ausschnitt 1d versehen und ergibt die vorkonfigurierte PVB-Folie 1c, wie in Fig. 1 gezeigt.

In einem ersten Schritt S4 eines sog. Inline-Prozesses werden die konfigurierte PVB-Folie 1c und das vorgefertigte elektronische Funktionsmodul 2 auf die erste Glasscheibe 1a aufgebracht, und in einem anschließenden Schritt S5 wird auf diese vormontierte Baugruppe die zweite Glasscheibe 1b aufgesetzt, und der Stapel wird in üblicher Weise zur Verbundglasscheibe 1 laminiert.

Die Ausführung der Erfindung ist nicht auf das oben erläuterte Beispiel beschränkt, sondern ebenso in einer Vielzahl von Abwandlungen möglich, die im Rahmen der anhängenden Ansprüche liegen.

### Bezugszeichenliste

- 1: Verbundglasscheibe
- 1a, 1b: erste und zweite Glasscheibe
- 1c: Polymerfolie (PVB-Folie)
- 1d: Ausschnitt in der Polymerfolie
- 2: elektronisches Funktionsmodul
- 2': Funktionsmodul-Struktur
- 2a: integrierte Zuleitung
- 2a': vorgefertigte Zuleitung
- 2b: elektronische Funktionseinheit
- 2c: Teil des Funktionsmoduls

## Patentansprüche

1. Verbundglasscheibe (1), die zwei Glas- oder Polykarbonatscheiben (1a, 1b) und mindestens eine zwischen diese eingeklebte Polymerfolie (1c) oder ein Folien-Laminat und eine zwischen diesen angeordnete elektronische Funktionseinheit (2b) aufweist, wobei in einem Teil-Flächenbereich der Verbundglasscheibe ein Ausschnitt (1d) der Polymerfolie oder des Folien-Laminats vorgesehen und in dem Ausschnitt ein vollständig vorgefertigtes elektronisches Funktionsmodul (2) untergebracht ist, das mehrere elektronische Funktionseinheiten (2b) und/oder sonstige Teile (2c) umfasst, welche lateral nebeneinander und/oder mindestens teilweise vertikal überlappend in einer elektrisch und mechanisch schützenden isolierenden Umhüllung, insbesondere einer Verkapselung aus einer polymeren Vergussmasse innerhalb des Funktionsmoduls angeordnet sind, welches eine Dicke aufweist, die höchstens gleich der Dicke der Polymerfolie oder des Folien-Laminats ist, wobei das elektronische Funktionsmodul (2) eine integral vorgefertigte elektrische Zuleitung (2a) umfasst, welche in einem Zuleitungs-Ausschnitt der Polymerfolie oder des Folien-Laminats untergebracht ist.

2. Verbundglasscheibe nach Anspruch 1, ausgeführt als Frontscheibe (1) oder Heckscheibe oder Dachverglasung eines Fahrzeugs, wobei der Ausschnitt (1d) der Polymerfolie (1c) oder des Folien-Laminats und das vorgefertigte elektronische Funktionsmodul (2) an oder nahe einer Kante der Verbundglasscheibe angeordnet sind.

3. Verbundglasscheibe nach Anspruch 1 oder 2, wobei die Dicke der Polymerfolie (1c) oder des Folien-Laminats und des elektronischen Funktionsmoduls kleiner als 1,2 mm ist, insbesondere im Bereich zwischen 0,6 mm und 1,0 mm, liegt.

4. Verbundglasscheibe nach einem der vorangehenden Ansprüche, wobei das elektronische Funktionsmodul (2) die Form eines flachen Prismas, insbesondere eines flachen Quaders, oder einer flachen Kreisscheibe hat.

5. Verbundglasscheibe nach Anspruch 4, wobei die beiden Hauptoberflächen des flachen Prismas oder der flachen Kreisscheibe mit Klebstoff zum Einkleben des elektronischen Funktionsmoduls (2) zwischen die Glas- oder Polykarbonatscheiben beschichtet sind.

6. Verbundglasscheibe nach einem der vorangehenden Ansprüche, wobei das elektronische Funktionsmodul (2) mindestens eine, insbesondere mehrere, der folgenden Funktionseinheiten umfasst: einen Feuchtigkeitssensor, einen Lichtsensor, einen Temperatursensor, eine Antenne, einen Aktuator, eine elektronische Verarbeitungs- oder Schalteinheit, eine LCD-Anzeigeeinheit und eine LED-Anzeigeeinheit.

7. Fahrzeug, insbesondere Straßenfahrzeug, mit mindestens einer Verbundglasscheibe (1) nach einem der vorangehenden Ansprüche.

8. Verfahren zur Herstellung einer Verbundglasscheibe (1) nach einem der vorangehenden Ansprüche, umfassend die Schritte:
- Bereitstellen einer ersten und zweiten Glas- bzw. Polykarbonatscheibe (1a, 1b),
- Bereitstellen einer Polymerfolie (1c) oder eines Folien-Laminats zur Verbindung der ersten und zweiten Glas- oder Polykarbonatscheibe, mit einem darin vorgesehenen Ausschnitt (1d),
- Bereitstellen eines vollständig vorgefertigten elektronischen Funktionsmoduls (2), dessen Querschnittsgestalt auf die Gestalt des Ausschnitts in der Polymerfolie oder dem Folien-Laminat abgestimmt und dessen Dicke höchstens gleich der Dicke der Polymerfolie oder des Folien-Laminats ist,
- Aufkleben der Polymerfolie und Aufsetzen des vorgefertigten elektronischen Funktionsmoduls auf eine Oberfläche der ersten oder zweiten Glas- oder Polykarbonatscheibe,
- Auflegen der zweiten Glas- oder Polykarbonatscheibe auf den hierdurch entstandenen Verbund und
- Laminieren des Verbundes mit der aufgelegten zweiten Glas- oder Polykarbonatscheibe zur Fertigstellung der Verbundglasscheibe, wobei das Bereitstellen des vollständig vorgefertigten elektronischen Funktionsmoduls (2) das Erzeugen einer isolierenden Verkapselung der darin enthaltenen Funktionseinheiten (2b) und/oder Teile (2c), insbesondere als Vergießen mit einer Vergussmasse, einschließt,
wobei das Bereitstellen des vollständig vorgefertigten elektronischen Funktionsmoduls (2) das Versehen desselben mit einer elektrischen Zuleitung (2a), insbesondere in Form eines Flachbandkabels, einschließt.

9. Verfahren nach Anspruch 8, wobei das Bereitstellen des elektronischen Funktionsmoduls (2) das Beschichten von zwei gegenüberliegenden, parallelen Hauptflächen desselben mit einem Klebstoff einschließt.

## Claims

1. Laminated glass pane (1) comprising two glass or polycarbonate panes (1a, 1b) and at least one polymer film (1c) or a film laminate bonded therebetween and an electronic functional unit (2b) arranged therebetween, wherein, in part of the area of the laminated glass pane, a cutout (1d) of the polymer film or of the film laminate is provided and, accommodated in the cutout, is a fully prefabricated electronic functional module (2) comprising multiple electronic functional units (2b) and/or other parts (2c) that are arranged within the functional module laterally alongside one another and/or at least partially vertically overlapping in an electrically and mechanically protective insulating shell, in particular an encapsulation composed of a polymeric casting compound that has a thickness that is at most equal to the thickness of the polymer film or of the film laminate, wherein the electronic functional module (2) includes an integrally prefabricated electrical supply line (2a) that is accommodated in a supply line cutout of the polymer film or of the film laminate.

2. Laminated glass pane according to claim 1, implemented as a front window (1) or rear window or roof glazing of a vehicle, wherein the cutout (1d) of the polymer film (1c) or of the film laminate and the prefabricated electronic functional module (2) are arranged at or near an edge of the laminated glass pane.

3. Laminated glass pane according to claim 1 or 2, wherein the thickness of the polymer film (1c) or of the film laminate and of the electronic functional module is less than 1.2 mm, in particular is in the range between 0.6 mm and 1.0 mm.

4. Laminated glass pane according to one of the preceding claims, wherein the electronic functional module (2) has the shape of a flat prism, in particular of a flat cuboid, or of a flat circular disk.

5. Laminated glass pane according to claim 4, wherein the two main surfaces of the flat prism or of the flat circular disk are coated with adhesive for bonding the electronic functional module (2) between the glass or polycarbonate panes.

6. Laminated glass pane according to one of the preceding claims, wherein the electronic functional module (2) comprises at least one, in particular several, of the following functional units: a moisture sensor, a light sensor, a temperature sensor, an antenna, an actuator, an electronic processing or switching unit, an LCD display unit, and an LED display unit.

7. Vehicle, in particular a road vehicle, with at least one laminated glass pane (1) according to one of the preceding claims.

8. Method for producing a laminated glass pane (1) according to one of the preceding claims, comprising the steps:
- providing a first and second glass or polycarbonate pane (1a, 1b),
- providing a polymer film (1c) or a film laminate for bonding the first and second glass or polycarbonate pane, with a cutout (1d) provided therein,
- providing a fully prefabricated electronic functional module (2), whose cross-sectional shape is matched to the shape of the cutout in the polymer film or the film laminate and whose thickness is at most equal to the thickness of the polymer film or of the film laminate,
- gluing the polymer film and placing the prefabricated electronic functional module on a surface of the first or second glass or polycarbonate pane,
- placing the second glass or polycarbonate pane on the resultant composite, and
- laminating the composite with the second glass or polycarbonate pane placed thereon to complete the laminated glass pane, wherein the provision of the fully prefabricated electronic functional module (2) completes the creation of an insulating encapsulation of the functional units (2b) and/or parts (2c) contained therein, in particular as encapsulation with a casting compound,
wherein the provision of the fully prefabricated electronic functional module (2) includes providing it with an electrical connection line (2a), in particular in the form of a ribbon cable.

9. Method according to claim 8, wherein the provision of the electronic functional module (2) includes the coating of two opposite, parallel main surfaces thereof with an adhesive.

## Revendications

1. Vitre en verre feuilleté (1) comprenant deux vitres en verre ou en polycarbonate (1a, 1b) et au moins un film polymère (1c) ou un stratifié de films collé entre elles et une unité fonctionnelle électronique (2b) disposée entre elles, dans laquelle, dans une partie de la surface de la vitre en verre feuilleté, une découpe (1d) du film polymère ou du stratifié de films est prévue et, logé dans la découpe, se trouve un module fonctionnel électronique entièrement préfabriqué (2) comprenant plusieurs unités fonctionnelles électroniques (2b) et/ou d'autres pièces (2c) qui sont disposées latéralement les unes à côté des autres et/ou se chevauchant au moins partiellement verticalement dans une coque isolante de protection électrique et mécanique, en particulier un encapsulage composé d'un composé de moulage polymère qui a une épaisseur qui est au plus égale à l'épaisseur du film polymère ou du stratifié de film, dans lequel le module fonctionnel électronique (2) comprend une ligne d'alimentation électrique préfabriquée intégralement (2a) qui est logée dans une découpe de ligne d'alimentation du film polymère ou du stratifié de film.

2. Vitre en verre feuilleté selon la revendication 1, réalisée sous forme de vitre avant (1) ou de vitre arrière ou de vitrage de toit d'un véhicule, dans laquelle la découpe (1d) du film polymère (1c) ou du stratifié de film et le module fonctionnel électronique préfabriqué (2) sont disposés au niveau ou à proximité d'un bord de la vitre en verre feuilletée.

3. Vitre en verre feuilleté selon la revendication 1 ou 2, dans laquelle l'épaisseur du film polymère (1c) ou du stratifié de film et du module fonctionnel électronique est inférieure à 1,2 mm, en particulier est comprise entre 0,6 mm et 1,0 mm.

4. Vitre en verre feuilleté selon l'une des revendications précédentes, dans lequel le module fonctionnel électronique (2) a la forme d'un prisme plat, en particulier d'un parallélépipède plat, ou d'un disque circulaire plat.

5. Vitre en verre feuilleté selon la revendication 4, dans laquelle les deux surfaces principales du prisme plat ou du disque circulaire plat sont revêtues d'adhésif pour coller le module fonctionnel électronique (2) entre les vitres en verre ou en polycarbonate.

6. Vitre en verre feuilleté selon l'une des revendications précédentes, dans laquelle le module fonctionnel électronique (2) comprend au moins une, en particulier plusieurs, des unités fonctionnelles suivantes: un capteur d'humidité, un capteur de lumière, un capteur de température, une antenne, un actionneur, une unité de traitement ou de commutation électronique, une unité d'affichage LCD et une unité d'affichage LED.

7. Véhicule, en particulier un véhicule routier, avec au moins une vitre en verre feuilleté (1) selon l'une des revendications précédentes.

8. Procédé de fabrication d'une vitre en verre feuilleté (1) selon l'une des revendications précédentes, comprenant les étapes suivantes :
- fournir une première et une seconde vitre en verre ou en polycarbonate (1a, 1b),
- fournir un film polymère (1c) ou un film stratifié pour coller la première et la seconde vitre en verre ou en polycarbonate, avec une découpe (1d) prévue à cet effet,
- fournir un module fonctionnel électronique entièrement préfabriqué (2), dont la forme en coupe transversale est adaptée à la forme de la découpe dans le film polymère ou le film stratifié et dont l'épaisseur est au plus égale à l'épaisseur du film polymère ou du film stratifié,
- collage du film polymère et placement du module fonctionnel électronique préfabriqué sur une surface de la première ou de la seconde vitre ou vitre en polycarbonate,
- placement de la seconde vitre ou vitre en polycarbonate sur le composite résultant, et
- stratification du composite avec la seconde vitre ou le second panneau de polycarbonate placé dessus pour compléter la vitre feuilletée, dans lequel la fourniture du module fonctionnel électronique entièrement préfabriqué (2) complète la création d'une encapsulation isolante des unités fonctionnelles (2b) et/ou des pièces (2c) qu'il contient, en particulier sous forme d'encapsulation avec un composé de moulage,
dans lequel la fourniture du module fonctionnel électronique entièrement préfabriqué (2) comprend le fait de le munir d'une ligne de connexion électrique (2a), en particulier sous la forme d'un câble plat.

9. Procédé selon la revendication 8, dans lequel la fourniture du module fonctionnel électronique (2) comprend le revêtement de deux surfaces principales opposées et parallèles de celui-ci avec un adhésif.
